# EUROPÄISCHE PATENTANMELDUNG

(11) **EP 1 544 533 A1**
(43) Veröffentlichungstag der Anmeldung: **22.06.2005**
(21) Anmeldenummer: 03029123.1
(22) Anmeldetag: 18.12.2003
(51) Int. Cl.: F16M 11/24

(54) **Stativ**

(71) Anmelder: Swarovski-Optik KG, 6060 Absam (AT)
(72) Erfinder: Mayr, Werner, 6060 Hall (AT); Lein, Helmut, 6020 Innsbruck (AT)
(74) Vertreter: Torggler, Paul Norbert, Dr.

(57) **Zusammenfassung**

Stativ (1) mit einem Stativkopf (2), daran angelenkten Stativbeinen (3) und einem durch eine Öffnung des Stativkopfes (2) verschiebbaren Mittelrohr (4) mit einer seitlich über das Mittelrohr (4) vorstehenden Auflagevorrichtung (5), insbesondere Auflageplatte für ein optisches Gerät, wobei am Mittelrohr (4) zumindest ein seitlich abstehender, von der Auflagevorrichtung (5) beabstandeter Rastvorsprung (6) angeordnet ist.

## Beschreibung

Die vorliegende Erfindung betrifft ein Stativ mit einem Stativkopf, daran angelenkten Stativbeinen und einem durch eine Öffnung des Stativkopfes verschiebbaren Mittelrohr mit einer seitlich über das Mittelrohr vorstehenden Auflagevorrichtung, insbesondere Auflageplatte für ein optisches Gerät.

Bei bekannten Stativen dieser Art werden unter anderem optische Geräte auf der dafür vorgesehenen Auflageplatte positioniert, die durch eine verschiebbare Mittelsäule in ihrer Vertikallage bewegt werden kann. Um eine Vertikalverstellung zu bewirken, muss zuerst üblicherweise eine Klemm- oder Arretiervorrichtung am Stativkopf gelöst werden. Dabei kann es speziell bei voluminösen und/oder schweren Geräten oder auch nur aus reiner Unachtsamkeit vorkommen, dass der bedienenden Person die Mittelsäule samt dem auf der Auflageplatte gelagerten Gerät durch die wirkende Schwerkraft nach unten entgleitet, wodurch die Gefahr besteht, dass dem Bediener die Hände bzw. Finger zwischen Auflageplatte und Stativkopf eingeklemmt werden können. Außerdem kann dem optischen Gerät bei einem plötzlichen Abrutschen der Mittelsäule mit abruptem Aufschlag der Auflageplatte auf dem Stativkopf durch die resultierende Erschütterung erheblicher Schaden zugefügt werden, da dabei sensible und kostenintensive optische und/oder elektronische Einrichtungen beschädigt werden können.

Aufgabe der vorliegenden Erfindung ist es daher, ein gattungsgemäßes Stativ vorzuschlagen, das den oben genannten Nachteil beseitigt und um damit Verletzungen des Bedienpersonals bzw. aufschlagbedingte Beschädigungen am Gerät zu vermeiden.

Dies wird erfindungsgemäß dadurch erreicht, dass am Mittelrohr zumindest ein seitlich abstehender, von der Auflagevorrichtung beabstandeter Rastvorsprung angeordnet ist.

Durch den von der Auflagevorrichtung beabstandeten Rastvorsprung kann die Mittelsäule nicht mehr bis zum Aufschlagen der Auflagevorrichtung auf den Stativkopf hinabgleiten. Dabei ist vorteilhaft vorgesehen, dass der Rastvorsprung eine erste Stellung aufweist, in der er über den Rand der Öffnung des Stativkopfes vorsteht, sodass der Rastvorsprung auf der Auflagefläche des Stativs zu liegen kommt, wodurch die Mittelsäule vorzeitig abgestoppt wird. Dabei ist ausreichend Platz zwischen Auflagevorrichtung und Stativkopf vorgesehen, sodass Verletzungen an den Händen des Bedienpersonals vermieden werden können. Günstigerweise ist vorgesehen, dass der Rastvorsprung zur Unterkante der Auflageplatte zwischen 2 cm und 12 cm, vorzugsweise zwischen 3 cm und 5 cm, beabstandet ist. Dadurch kann ein ausreichender Sicherheitsabstand zwischen Auflagevorrichtung und Stativkopf bei größtmöglicher Verschiebungsvariabilität und kompakter Bauweise vereint werden.

Die erste (vorstehende) Stellung des Rastvorsprungs ist die übliche Position, während das Stativ in Gebrauchsstellung ist. Wird nach Verwendung das Stativ zum Zweck des Verstauens oder zum Transport zusammengeschoben, so ist vorteilhafterweise vorgesehen, dass der Rastvorsprung gegenüber dem Mittelrohr beweglich ist und eine zweite Stellung aufweist, in der er mit der Oberfläche des Mittelrohrs im Wesentlichen bündig abschließbar oder darin versenkbar ist. Dadurch kann erreicht werden, dass die Mittelsäule ungehindert in der Öffnung des Stativkopfs verschoben werden kann, ohne dass der Rastvorsprung das Abbauen des Stativs blockiert.

Günstigerweise ist vorgesehen, dass der Rastvorsprung federbeaufschlagt oder federnd ausgebildet ist, wobei gemäß einer bevorzugten Ausführungsform der Erfindung der Rastvorsprung in Richtung der ersten Stellung federbelastet oder federnd ist und entgegen der Federkraft in die zweite Stellung drückbar ist. Dadurch kann einerseits das Stativ nach Gebrauch einfach abgebaut werden, ohne dass der Rastvorsprung diesen Vorgang behindert, andererseits befindet sich der Rastvorsprung in der Ruhelage immer in der seitlich abstehenden Position, wodurch ein versehentliches Abrutschen des Mittelrohrs mit Aufschlagen der Auflagevorrichtung am Stativkopf vermieden werden kann.

Besonders vorteilhaft ist vorgesehen, dass der Rastvorsprung vorzugsweise aus Kunststoff gebildet ist. Hierbei können verschiedene hochwertige Kunststoffmaterialien Verwendung finden, die günstige Eigenschaften hinsichtlich Bruchsicherheit, Flexibilität und Temperaturfluktuationen aufweisen. Außerdem können diese sehr einfach und kostengünstig im Spritzgussverfahren hergestellt werden.

Gemäß einer weiteren vorteilhaften Weiterbildung der Erfindung ist vorgesehen, dass der Rastvorsprung in axialer Richtung dämpfend ausgebildet ist. Durch diese Anordnung kann die Wucht des Aufpralls abgefangen werden, sodass auftretende Erschütterungen abgeschwächt werden können. Dies ist vor allem bei optischen und/oder elektronischen Geräten von erheblichem Vorteil, da derartige Baugruppen üblicherweise sehr sensibel auf mechanische Belastungen reagieren. Durch diese Maßnahme können Schäden an den Glaskomponenten bzw. an den Platinen elektronischer Baugruppen reduziert werden. Dieser Effekt kann insofern noch verbessert werden, indem der Rastvorsprung einen mäanderförmigen Verlauf aufweist. Hierbei wird ein Luftspalt vom Rastvorsprung eingeschlossen, der wie eine Puffer- bzw. Knautschzone wirkt, und bei einer auftretenden achsrechten Belastung wie ein Axialkompensator wirkt.

Schließlich ist vorgesehen, dass ein weiterer, gegebenenfalls versenkbarer, Rastvorsprung im Bereich des anderen Endes des Mittelrohrs angeordnet ist. Damit wird das Mittelrohr in seiner Vertikalverschiebung begrenzt, sodass ein unbeabsichtigtes vollständiges Herausziehen des Mittelrohrs aus der Öffnung des Stativkopfs vermieden werden kann. Selbstverständlich kann dieser ebenfalls versenkbar ausgebildet sein, damit dieser beim Abbauen des Stativs nicht hinderlich ist.

Weitere Einzelheiten und Vorteile der vorliegenden Erfindung werden anhand der Figurenbeschreibung unter Bezugnahme auf die Zeichnungen im Folgenden näher erläutert. Darin zeigt:
- Fig. 1: eine schematische Darstellung des Stativs mit den erfindungsgemäßen Rastvorsprüngen
- Fig. 2: eine schematisch dargestellte Ausführungsform eines Rastvorsprungs im Detail
- Fig. 3: ein schematisch dargestelltes Äusführungsbeispiel des Mittelrohres
- Fig. 4: eine alternative Ausführungsform des Stativs, und
- Fig. 5: ein Schnitt durch das Mittelrohr aus Fig. 4

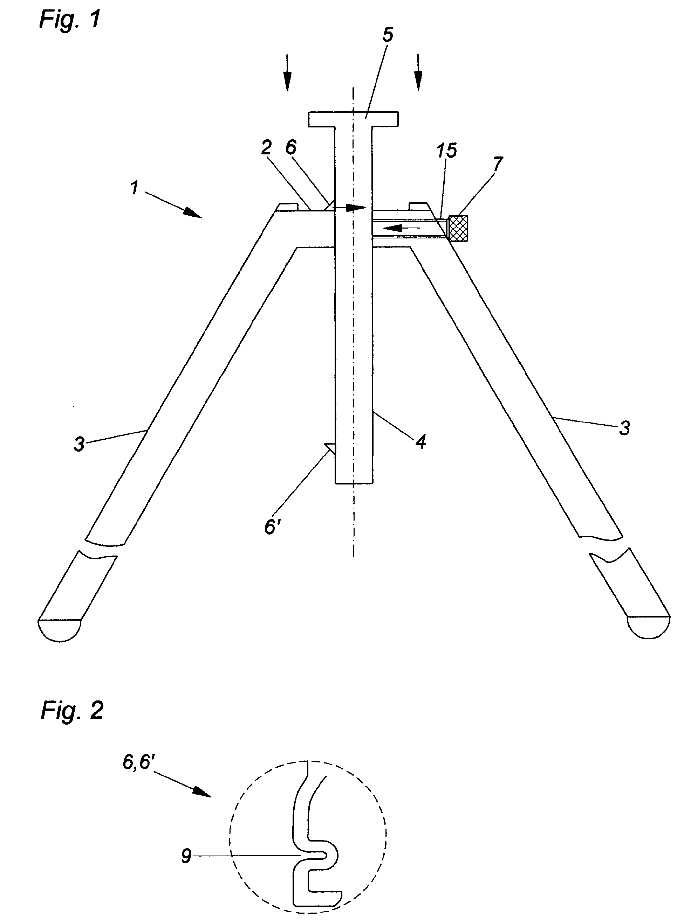

Fig. 1 zeigt eine schematische Ansicht des Stativs 1 mit einem Stativkopf 2, an dem beispielhaft Stativbeine 3 schwenkbar angelenkt sind. Durch die Öffnung im Stativkopf 2 ist das Mittelrohr 4 verschiebbar gelagert, wobei in dieser Figur die Auflagevorrichtung 5 als tellerförmige Auflageplatte, beispielsweise für ein optisches Gerät, ausgebildet ist. Diese Auflageplatte ist am oberen Ende des Mittelrohrs 4 angeordnet.

Erfindungsgemäß ist nun vorgesehen, dass am Mittelrohr 4 zumindest ein seitlich abstehender, von der Auflagevorrichtung 5 beabstandeter Rastvorsprung 6 angeordnet ist. Dieser Rastvorsprung 6 ist hier lediglich schematisch dargestellt und wird in einer detaillierteren Ausführungsform in Fig. 2 noch näher gezeigt. Durch die Anordnung des Rastvorsprungs 6 kann die Mittelsäule 4 nicht vollständig durch die Schwerkraft nach unten gleiten, sodass ein Aufprallen der Unterkante der Auflagevorrichtung 5 auf den Stativkopf 2 vermieden werden kann. Dadurch können die Hände des Benutzers vor Verletzungen geschützt sowie aufprallbedingte Schäden des auf der Auflagevorrichtung 5 gelagerten Gerätes ausgeschlossen werden. Zum Fixieren der Mittelsäule 4 ist eine Halte- oder Klemmvorrichtung 7 in Form einer Klemmschraube 15 am Stativkopf 2 vorgesehen. Diese Halte- und Klemmvorrichtung 7 kann aber grundsätzlich auf verschiedenste Art und Weise realisiert werden kann, beispielsweise als Klemmmuffe mit hohem Reibungskoeffizient oder mittels Arretierung von dafür vorgesehenen Bolzen. In dem gezeigten Ausführungsbeispiel ist ein weiterer, gegebenenfalls versenkbarer, Rastvorsprung 6' im Bereich des anderen Endes des Mittelrohrs 4 angeordnet. Damit wird ein ungewolltes vollständiges Herausziehen der Mittelsäule 4 aus dem Stativkopf 2 verhindert.

Die Fig.2 zeigt ein vergrößertes Detail des Rastvorsprungs 6 in einer beispielhaften Ausführungsform. Der Rastvorsprung 6 weist einen mäanderförmigen Verlauf auf, wodurch ein Luftspalt 9 eingeschlossen wird. Dieser Luftspalt 9 wird bei einer axialen Belastung zusammengedrückt und wirkt dabei als dämpfendes Element.

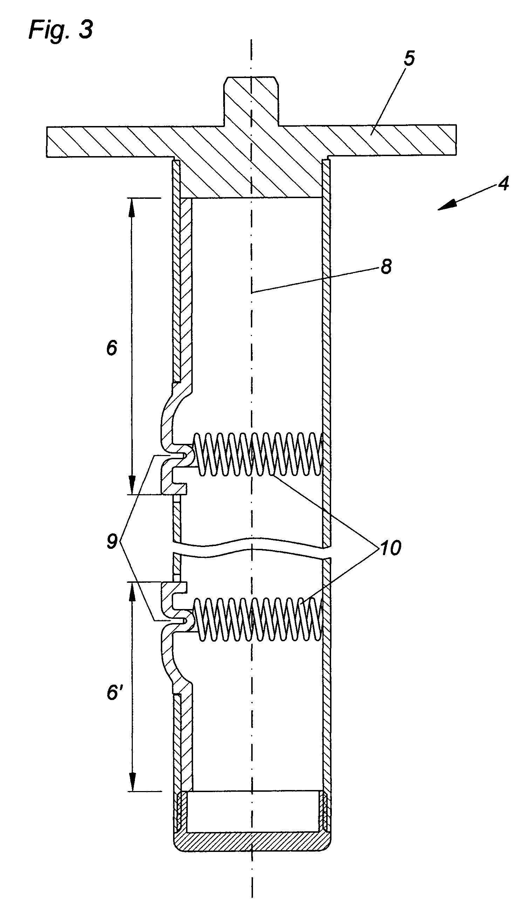

Fig. 3 zeigt eine beispielhafte schematische Detailansicht des Mittelrohrs 4. Erfindungsgemäß ist ein seitlich abstehender, von der Auflagevorrichtung 5 beabstandeter Rastvorsprung 6 angeordnet. In dieser Figur ist dieser durch die Feder 10 beaufschlagt und steht in der Ruhelage seitlich ab. Dadurch stützt sich der Rastvorsprung 6 auf der Oberfläche des Stativkopfs 2 ab und beabstandet dadurch die Auflagevorrichtung 5 vom Stativkopf. Der Rastvorsprung 6 ist entgegen der federnden Kraft in eine zweite Stellung drückbar, sodass er mit der Oberfläche des Mittelrohrs 4 bündig abschließt oder darin versenkbar ist. Dadurch kann der Rastvorsprung 6 bei Bedarf einfach eingedrückt und das Mittelrohr 4 vollständig abgesenkt werden. Der Rastvorsprung 6 ist günstigerweise so ausgebildet, dass dieser in axialer Richtung (also parallel zur Mittelachse 8 des Mittelrohrs 4) dämpfend ausgebildet ist. Diese Dämpfung wird durch den mäanderförmigen Verlauf des Rastvorsprungs 6 erreicht.

Hierdurch wird ein Luftspalt 9 eingeschlossen, der bei axialer Belastung - beispielsweise bei Aufprall des Rastvorsprungs 6 auf der Oberfläche des Stativkopfs 2 - zusammengeschoben wird, wodurch auftretende Erschütterungen reduziert werden können. Damit können technisch sensible Geräte vor Schäden geschützt werden. Im Bereich des anderen Endes des Mittelrohrs 4 ist ein weiterer versenkbarer Rastvorsprung 6' angeordnet, der ebenfalls durch eine Feder 10 beaufschlagt wird. Dieser ist im gezeigten Ausführungsbeispiel nach oben hin sich weitend ausgebildet - spiegelverkehrt zum oberen Rastvorsprung - wobei sich "oben" immer auf die übliche Einbaulage des Mittelrohrs 4 bezieht. Durch diesen Rastvorsprung 6' kann ein vollständiges unbeabsichtigtes Herausziehen der Mittelsäule 4 aus dem Stativkopf 2 verhindert werden. Es können in diesem Bereich der Mittelsäule 4 auch weitere Rastvorsprünge 6' angeordnet sein. Das Mittelrohr 4 selbst weist eine runde oder polygonale Querschnittsfläche auf, selbstverständlich ist aber auch eine ovale Querschnittsgeometrie denkbar.

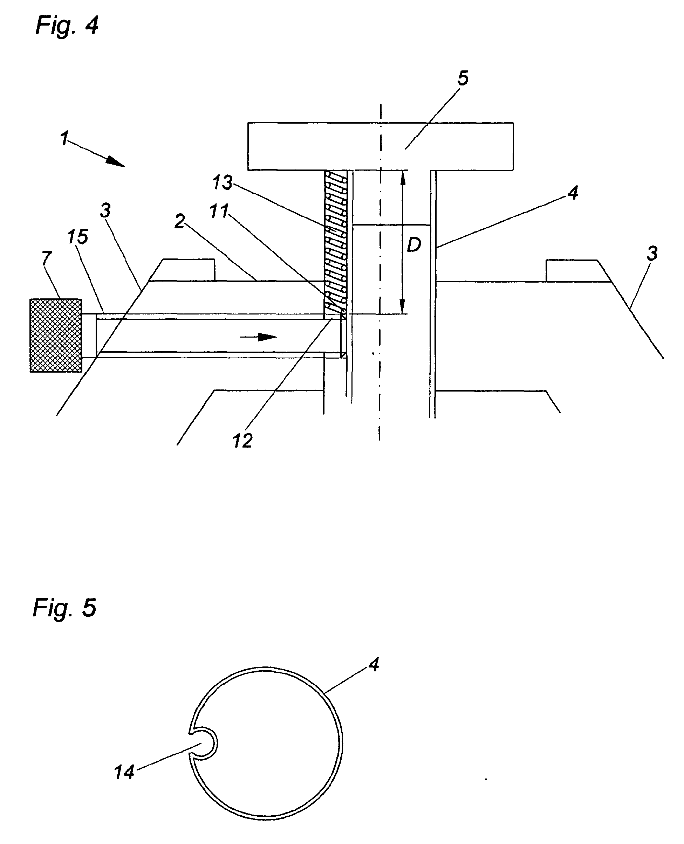

Die gegenständliche Erfindung erfasst auch eine kinematische Umkehr der Rastvorsprünge 6 und 6', wie es in der Fig. 4 beispielhaft dargestellt wird. Diese Figur zeigt ein Stativ 1 mit einem Stativkopf 2, an dem Stativbeine 3 angelenkt sind. Durch eine Öffnung des Stativkopfes 2 ist ein Mittelrohr 4 verschiebbar gelagert. Eine Auflagevorrichtung 5 steht seitlich über das Mittelrohr 4 vor. Das Mittelrohr 4 weist einen gefederten Anschlag 11 auf, der mit Abstand D unterhalb der Auflagevorrichtung 5 angeordnet ist. Dieser Anschlag 11 ruht in der gezeigten Figur auf einem bewegbaren Gegenanschlag 12 des Stativkopfes 2. Der Anschlag 11 ist am Ende einer Spiralfeder 13 angeordnet, die in Mittelrohrlängsrichtung verläuft. Der Anschlag 11 der Spiralfeder 13 ist im Inneren des Mittelrohres 4 in einer axial verlaufenden Nut 14 mit kreisabschnittsförmiger Querschnittsfläche (Fig. 5) angeordnet. Der Gegenanschlag 12 wird durch die Klemmschraube 15, die quer zur Mittelrohrlängsrichtung verläuft, gebildet. Dieser Gegenanschlag 12 an der Halte- oder Klemmvorrichtung 7 wirkt in der ersten gezeigten Stellung mit dem Anschlag zusammen und ist in einer zweiten Stellung (beispielsweise durch Ziehen oder Herausdrehen der Klemmschraube 15) vom Anschlag 11 außer Eingriff zu bringen. Die Klemmschraube 15 wirkt also in einer ersten Stellung mit dem Anschlag 11 zusammen und beabstandet durch die dazwischenliegende Spiralfeder 13 die Unterkante der Auflagevorrichtung 5 vom Stativkopf 2. In einer zweiten Stellung ist die Klemmschraube 15 vom Anschlag 12 außer Eingriff bringbar, indem diese herausgedreht oder herausgezogen wird. Hierbei kann eine Vorrichtung vorgesehen werden, die die Klemmschraube 15 zum Schutz von unbeabsichtigtem Abgleiten der Mittelsäule 4 automatisch von der zweiten Stellung in die erste Stellung bewegt. In einer dritten Stellung dient die Klemmschraube 15 zur klemmenden Fixierung der Mittelsäule 4 relativ zum Stativkopf 2. Durch diese kinematische Umkehrlösung kann eine konstruktiv einfache Variante zum Rastvorsprung 6 realisiert werden.

Es versteht sich von selbst dass die vorliegende Erfindung nicht auf die in den Figuren gezeigten Ausführungen beschränkt ist noch diese eingeschränkt werden soll. Es gibt verschiedene konstruktive Lösungen zur Realisierung der Rastvorsprünge, beispielsweise eine Anordnung mit Druckknöpfen, mit schwingungsgedämpftem Zapfen, etc. Im Weiteren ist der mäanderförmige Verlauf der Rastvorsprünge in Fig. 2 nur beispielhaft gezeigt, es kann durchaus eine Vielzahl von eingeschlossenen Luftspalten realisiert werden, die eine verbesserte Dämpfung in axialer Richtung bewirken.

## Patentansprüche

1. Stativ (1) mit einem Stativkopf (2), daran angelenkten Stativbeinen (3) und einem durch eine Öffnung des Stativkopfes (2) verschiebbaren Mittelrohr (4) mit einer seitlich über das Mittelrohr (4) vorstehenden Auflagevorrichtung (5), insbesondere Auflageplatte für ein optisches Gerät, **dadurch gekennzeichnet, dass** am Mittelrohr (4) zumindest ein seitlich abstehender, von der Auflagevorrichtung (5) beabstandeter Rastvorsprung (6) angeordnet ist.

2. Stativ (1) nach Anspruch 1, **dadurch gekennzeichnet, dass** der Rastvorsprung (6) eine erste Stellung aufweist, in der er über den Rand der Öffnung des Stativkopfes (2) vorsteht.

3. Stativ (1) nach einem der Ansprüche 1 oder 2, **dadurch gekennzeichnet, dass** der Rastvorsprung (6) gegenüber dem Mittelrohr (4) beweglich ist und eine zweite Stellung aufweist, in der er mit der Oberfläche des Mittelrohrs (4) im Wesentlichen bündig abschließbar oder darin versenkbar ist.

4. Stativ (1) nach einem der Ansprüche 1 bis 3, **dadurch gekennzeichnet, dass** der Rastvorsprung (6) federbeaufschlagt oder federnd ausgebildet ist.

5. Stativ (1) nach den Ansprüchen 2, 3 und 4, **dadurch gekennzeichnet, dass** der Rastvorsprung (6) in Richtung der ersten Stellung federbelastet oder federnd ist und entgegen der Federkraft in die zweite Stellung drückbar ist.

6. Stativ (1) nach einem der Ansprüche 1 bis 5, **dadurch gekennzeichnet, dass** der Rastvorsprung (6) vorzugsweise aus Kunststoff gebildet ist.

7. Stativ (1) nach einem der Ansprüche 1 bis 6, **dadurch gekennzeichnet, dass** der Rastvorsprung (6) in axialer Richtung dämpfend ausgebildet ist.

8. Stativ (1) nach einem der Ansprüche 1 bis 7, **dadurch gekennzeichnet, dass** der Rastvorsprung (6) einen mäanderförmigen Verlauf aufweist.

9. Stativ (1) nach einem der Ansprüche 1 bis 8, **dadurch gekennzeichnet, dass** die Auflagevorrichtung (5) vorzugsweise im Wesentlichen eine tellerförmige Auflageplatte ist.

10. Stativ (1) nach Anspruch 9, **dadurch gekennzeichnet, dass** die Auflageplatte am Ende des Mittelrohres (4) angeordnet ist.

11. Stativ (1) nach Anspruch 9 oder 10, **dadurch gekennzeichnet, dass** der Rastvorsprung (6) zur Unterkante der Auflageplatte zwischen 2 cm und 12 cm, vorzugsweise zwischen 3 cm und 5 cm, beabstandet ist.

12. Stativ (1) nach einem der Ansprüche 1 bis 11, **dadurch gekennzeichnet, dass** ein weiterer, gegebenenfalls versenkbarer, Rastvorsprung (6') im Bereich des anderen Endes des Mittelrohrs (4) angeordnet ist.

13. Stativ (1) nach einem der Ansprüche 1 bis 12, **dadurch gekennzeichnet, dass** das Mittelrohr (4) durch eine Halte- oder Klemmvorrichtung (7) am Stativkopf (2) feststellbar ist.

14. Stativ (1) nach einem der Ansprüche 1 bis 13, **dadurch gekennzeichnet, dass** das Mittelrohr (4) eine runde oder polygonale Querschnittsfläche aufweist.

15. Stativ (1) mit einem Stativkopf (2), daran angelenkten Stativbeinen (3) und einem durch eine Öffnung des Stativkopfes (2) verschiebbaren Mittelrohr (4) mit einer seitlich über das Mittelrohr (4) vorstehenden Auflagevorrichtung (5), insbesondere Auflageplatte für ein optisches Gerät, **dadurch gekennzeichnet, dass** das Mittelrohr (4) einen vorzugsweise gefederten Anschlag (11) aufweist, der mit Abstand (D) unterhalb der Auflagevorrichtung (5) angeordnet ist, und dass der Stativkopf (2) einen bewegbaren Gegenanschlag (12) aufweist.

16. Stativ (1) nach Anspruch 15, **dadurch gekennzeichnet, dass** der Anschlag (11) am Ende einer Feder, vorzugsweise einer in Mittelrohrlängsrichtung verlaufenden Spiralfeder (13), ausgebildet oder angeordnet ist.

17. Stativ nach Anspruch 15 oder 16, **dadurch gekennzeichnet, dass** der Anschlag (11) im Inneren des Mittelrohres (4), vorzugsweise in einer axial verlaufenden Nut (14), angeordnet ist.

18. Stativ nach einem der Ansprüche 15 bis 17, **dadurch gekennzeichnet, dass** der Gegenanschlag (12) in einer ersten Stellung mit dem Anschlag (11) zusammenwirkt und in einer zweiten Stellung vom Anschlag (11) außer Eingriff bringbar ist.

19. Stativ nach einem der Ansprüche 15 bis 18 und Anspruch 13, **dadurch gekennzeichnet, dass** der Gegenanschlag (12) - vorzugsweise als quer zur Mittelrohrlängsrichtung verlaufende Klemmschraube (15) - an der Halte- und Klemmvorrichtung (7) ausgebildet ist.

20. Stativ nach Anspruch 19, **dadurch gekennzeichnet, dass** die Klemmschraube (15) in einer ersten Stellung mit dem Anschlag (11) zusammenwirkt und in einer zweiten Stellung vom Anschlag (11) außer Eingriff bringbar ist und weiters in einer dritten Stellung die Lage des Mittelrohres (4) relativ zum Stativkopf (2), vorzugsweise klemmend, fixiert.
